(19) Europäisches Patentamt
European Patent Office
Office européen des brevets

(11) **EP 3 190 776 A1**

(12) **EUROPEAN PATENT APPLICATION**
published in accordance with Art. 153(4) EPC

(43) Date of publication:
**12.07.2017 Bulletin 2017/28**

(21) Application number: **16739384.2**

(22) Date of filing: **13.05.2016**

(51) Int Cl.:
***H04L 29/08*** (2006.01)

(86) International application number:
**PCT/CN2016/082145**

(87) International publication number:
**WO 2017/080153 (18.05.2017 Gazette 2017/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.11.2015  CN 201510767535**

(71) Applicants:
• **LE Holdings (Beijing) Co., Ltd.**
  **Beijing 100025 (CN)**

• **Leauto Intelligent Technology (BEIJING) Co. Ltd**
  **Beijing 100025 (CN)**

(72) Inventor: **WANG, Lei**
  **Beijing 100025 (CN)**

(74) Representative: **Botti, Mario**
  **Botti & Ferrari S.r.l.**
  **Via Cappellini, 11**
  **20124 Milano (IT)**

(54) **METHOD FOR SELECTING CONTENT DELIVERY NETWORK (CDN) NODE, AND APPARATUS THEREOF**

(57)    The embodiment of the present disclosure provides a method and a device for selecting a content delivery network (CDN) node, for solving the problem that data transmission time delay between a terminal and a selected default CDN node server is comparatively great in the prior art. The method includes the following operations: after initiating a domain name resolution request through a plurality of links, determining a CDN node returned by a network side corresponding to the domain name resolution request; for one link, when it is determined that there are a plurality of CDN nodes, determining a time delay of each CDN node corresponding to the link; for one CDN node, determining a time delay average value corresponding to the CDN node according to the time delay between the CDN node and each link; and selecting one CDN node from all CDN nodes according to the determined time delay average value corresponding to the CDN node.

After initiating a domain name resolution request through a plurality of links, determining CDN nodes returned by a network side aiming at the domain name resolution request — S101

For each link, when it is determined that there are a plurality of CDN nodes, determining a time delay of each CDN node corresponding to the link — S102

For each CDN node, determining a time delay average value corresponding to the CDN node according to time delays between the CDN node and each link — S103

Selecting one CDN node from all CDN nodes according to the determined time delay average value corresponding to each CDN node — S104

Fig.2

## Description

### CROSS-REFERENCE TO RELATED APPLICATIONS

This application claims the benefit of Chinese Patent Application No. 201510767535.6, filed with the Chinese Patent Office on November 11, 2015 and entitled "method and device for selecting content delivery network node", which is hereby incorporated by reference in its entirety.

### FIELD OF TECHNOLOGY

The embodiment of the present disclosure relates to the technical field of network communication, in particular to a method and a device for selecting a content delivery network (CDN) node.

### BACKGROUND

The basic thought of a CDN (Content Delivery Network) is to avoid bottlenecks and links which may influence data transmission speed and stability on the Internet as many as possible, so as to enable contents to be transmitted more quickly and stably. By placing node servers at all positions of a network, an intelligent virtual network which takes the existing Internet as infrastructure is formed.

A DNS (Domain Name System) refers to a global distributed name server system and mainly plays a role of resolving domain names of websites into specific server IP (Internet Protocol) addresses. When a terminal accesses a certain website, by resolving an IP address of a CDN node server which is closest to the terminal and is used for providing service, a DNS server authorized by the CDN returns the IP address of the CDN node to a user, such that the terminal dispatches the IP address to perform data transmission.

With the development of network technologies and the occurrence of bandwidth bottlenecks, in order to improve user access speed and service quality, the terminal can realize the effect that a plurality of links simultaneously access the Internet server based on multi-link access devices. However, in the prior art, when one terminal accesses a certain website through multiple links, each link corresponds to a local DNS server address allocated by an ISP (Internet Service Provider), the terminal just randomly selects one from a plurality of IP addresses of CDN node servers acquired after the local DNS server processes the request as the IP address of the default CDN node for communication, and the default CDN node server may have the problem that data transmission delay between it and the terminal is comparatively great.

### SUMMARY

The embodiment of the present disclosure provides a method and a device for selecting a CDN node, which are configured for solving the problem that data transmission time delay between a terminal and a selected default CDN node server is comparatively great in the prior art.

The method and the device for selecting a CDN node provided by the embodiment of the present disclosure include:

a method for selecting a CDN node, which includes the following operations: after initiating a domain name resolution request through a plurality of links, determining a CDN node returned by a network side corresponding to the domain name resolution request; for one link, when it is determined that there are a plurality of CDN nodes, determining time delay of each CDN node corresponding to the link; for one CDN node, determining a time delay average value corresponding to the CDN node according to time delay between the CDN node and each of the links; and selecting one CDN node from all the CDN nodes according to the determined time delay average value corresponding to the CDN node.

Based on the same disclosure concept, the embodiment of the present disclosure further provides a device for selecting a CDN node, which includes: a CDN node determination module, a time delay determination module, a time delay average value determination module and a CDN node selection module, wherein the CDN node determination module is configured for, after initiating a domain name resolution request through a plurality of links, determining a CDN node returned by a network side corresponding to the domain name resolution request; the time delay determination module is configured for, for one link, when it is determined that there are a plurality of CDN nodes, determining a time delay of each CDN node corresponding to the link; the time delay average value determination module is configured for, for one CDN node, determining a time delay average value corresponding to the CDN node according to the time delay between the CDN node and each of the links; and the CDN node selection module is configured for selecting one CDN node from all CDN nodes according to the determined time delay average value corresponding to the CDN node.

By adopting the method and the device for selecting the CDN node provided by the embodiment of the disclosure, on one hand, a terminal obtains the plurality of CDN nodes returned the network side corresponding to the domain name resolution request by initiating the domain name resolution request through the plurality of links; and on the other hand, the terminal obtains the time delay of each CDN node corresponding to each link by transmitting test information to each CDN node and further selects one CDN node corresponding to the minimum time delay average value from the CDN nodes as the CDN node which needs to be selected, such that the time delay is reduced by dispatching the CDN node to perform data transmission and the access speed and service quality are improved.

Based on the same disclosure concept, the embodiment of the present disclosure further provides a device for selecting a CDN node, which includes: one or more processor; and a memory, wherein the memory further includes one or more units, and the one or more units are configured to be executed by the one or more processors to perform: after initiating a domain name resolution request through a plurality of links, determining a CDN node returned by a network side corresponding to the domain name resolution request; for one link, when it is determined that there are a plurality of CDN nodes, determining time delay of each CDN node corresponding to the link; fort one CDN node, determining a time delay average value corresponding to the CDN node according to time delay between the CDN node and each of the links; and selecting one CDN node from all the CDN nodes according to the determined time delay average value corresponding to the CDN node.

Based on the same disclosure concept, the embodiment of the present disclosure further provides a software product to be used combining the device for selecting a CDN node, the software product includes computer readable storage medium and program mechanism embedded in the storage medium, the program mechanism includes instructions including the following steps: after initiating a domain name resolution request through a plurality of links, determining a CDN node returned by a network side corresponding to the domain name resolution request; for one link, when it is determined that there are a plurality of CDN nodes, determining time delay of each CDN node corresponding to the link; fort one CDN node, determining a time delay average value corresponding to the CDN node according to time delay between the CDN node and each of the links; and selecting one CDN node from all the CDN nodes according to the determined time delay average value corresponding to the CDN node.

## BRIEF DESCRIPTION OF THE DRAWING(S)

Fig. 1 is a schematic diagram of links between a terminal and other servers provided by the embodiment of the present disclosure;
Fig. 2 is a schematic diagram of a flow of a method for selecting a CDN node provided by the embodiment of the present disclosure;
Fig. 3 is an interaction diagram between a terminal and other servers provided by the embodiment of the present disclosure;
Fig. 4 is a device for selecting a CDN node provided by the embodiment of the present disclosure;
Fig. 5 is a structural schematic diagram of a vehicle-carried antenna system in the embodiment of the present disclosure;
Fig. 6a is a structural schematic diagram of an antenna module in the embodiment of the present disclosure;
Fig. 6b is a structural schematic diagram of an antenna module in the embodiment of the present disclosure;
Fig. 6c is a structural schematic diagram of an antenna module in the embodiment of the present disclosure;
Fig. 6d is a structural schematic diagram of an antenna module in the embodiment of the present disclosure;
Fig. 7 is a structural schematic diagram of an LTE module in the embodiment of the present disclosure;
Fig. 8 is a mounting position schematic diagram of LTE modules in the embodiment of the present disclosure;
Fig. 9 is a mounting position schematic diagram of LTE modules in the embodiment of the present disclosure;
Fig. 10 is a structural schematic diagram of a vehicle-carried antenna system in the embodiment of the present disclosure;
Fig. 11 is a structural schematic diagram of a vehicle-carried antenna system in the embodiment of the present disclosure;
Fig. 12 is a structural schematic diagram of a vehicle-carried antenna system in the embodiment of the present disclosure;
Fig. 13 is a structural schematic diagram of an antenna module in the embodiment of the present disclosure;
Fig. 14 is a structural schematic diagram of an antenna module in the embodiment of the present disclosure;
Fig. 15 is a structural schematic diagram of an antenna module in the embodiment of the present disclosure;
Fig. 16 is a mounting position schematic diagram of antenna modules in the embodiment of the present disclosure;
Fig. 17 is a mounting position schematic diagram of antenna modules in the embodiment of the present disclosure;
Fig. 18 is a mounting position schematic diagram of antenna modules in the embodiment of the present disclosure;
Fig. 19 is a mounting position schematic diagram of antenna modules in the embodiment of the present disclosure;
Fig. 20 is a structural schematic diagram of a vehicle-carried antenna system in the embodiment of the present disclosure;
Fig. 21 is a structural schematic diagram of a vehicle-carried antenna system in the embodiment of the present disclosure;
Fig. 22 is a structural schematic diagram of a vehicle-carried antenna system in the embodiment of the present disclosure;

Fig. 23 is a structural schematic diagram of a vehicle-carried antenna system in the embodiment of the present disclosure;

Fig. 24 is a structural block diagram of a device for selecting a CDN node in the embodiment of the present disclosure.

## DESCRIPTION OF THE EMBODIMENTS

In order to enable the purposes, technical solutions and advantages of the embodiments of the present disclosure to be clearer, the technical solutions in the embodiments of the present disclosure will be clearly and completely described below in combination with the drawings in the embodiments of the present disclosure. Obviously, the embodiments to be described are just partial embodiments of the present disclosure instead of all embodiments. All other embodiments obtained by one skilled in the art on the basis of the embodiments in the present application without contributing any inventive labor shall belong to the protection range of the present disclosure.

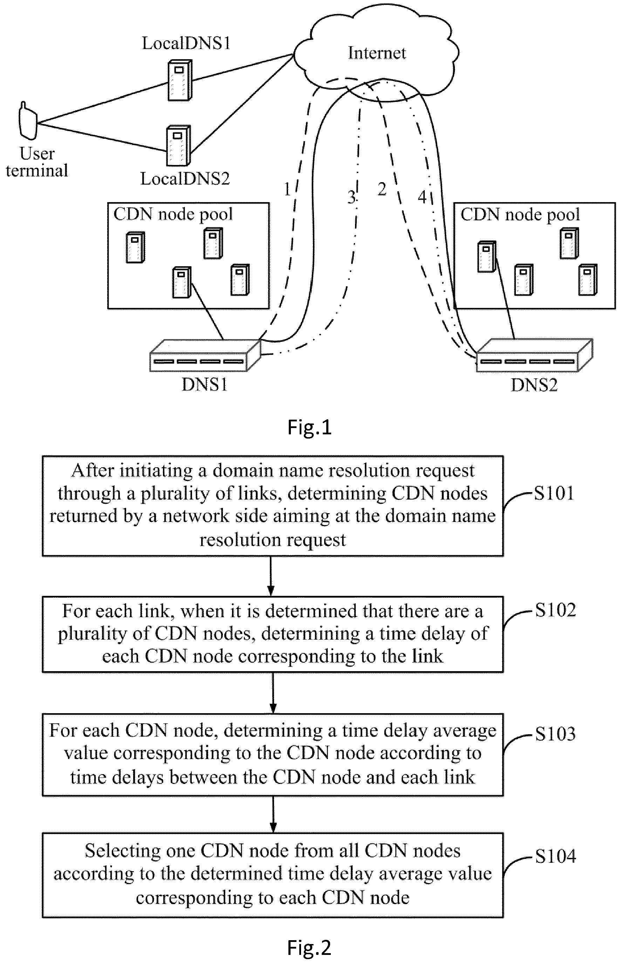

As shown in Fig. 1, when a terminal simultaneously uses SIM (Subscriber Identity Module) cards of two operators (such as China Mobile and China Unicom) to access a target website, the terminal initiates a domain name resolution request of the target website towards a local DNS server of the operator China Mobile and a local DNS server of the operator China Unicom; after the local DNS servers receive the domain name resolution request, the local DNS servers transmit the domain name resolution request to a DNS server 1 and a DNS server 2 of Internet service providers corresponding to the target website; and then the DNS server 1 and the DNS server 2 of the Internet service providers respectively select a comparatively suitable CDN node from a CDN node pool respectively dispatched thereby and return the IP addresses of the selected two CDN nodes to the terminal. In the prior art, one CDN node is randomly selected from the two CDN nodes and this may have the problem that data transmission time delay between the terminal and the CDN node is comparatively great. In order to solve this problem, the embodiment of the present disclosure provides the following solution method.

Referring to Fig. 2 which is a schematic diagram of a flow of a method for selecting a CDN node provided by the embodiment of the present disclosure, the specific realization method comprises the following operations:

Operation S101: after initiating a domain name resolution request through a plurality of links, determining a CDN node returned by a network side corresponding to the domain name resolution request.

Operation S102: for one link, when it is determined that there are a plurality of CDN nodes, determining a time delay of each CDN node corresponding to the link.

Operation S103: for one CDN node, determining a time delay average value corresponding to the CDN node according to the time delay between the CDN node and each of the links.

Operation S104: selecting one CDN node from all CDN nodes according to the determined time delay average value corresponding to the CDN node.

When a user accesses a domain name of a target website through a terminal device, the terminal initiates a domain name resolution request of the target website towards a network side, and the network side finds an IP address of a server of a service provider of the target website according to the domain name resolution request and returns the address to the terminal. Therefore, the terminal used by the user actually communicates with the IP address server. In order to guarantee communication reliability and communication speed, the network side adds a network node, i.e., a CDN node to the IP address server with which the terminal actually communicates, so as to accelerate communication data transmission. Therefore, a process that the terminal used by the user initiates the domain name resolution request is a process of selecting a CDN node. Different CDN node selection causes different service quality.

In operation S101, in order to guarantee that one terminal can simultaneously use a plurality of links, the terminal needs to complete configuration in advance, i.e., configuration of port numbers of DNS servers of all Internet operators corresponding to the plurality of links, such that the DNS servers of all Internet operators can simultaneously receive the domain name resolution request.

Optionally a configuration method in the embodiment of the present disclosure can comprise the following operations: firstly modifying a local application program of the terminal, opening a file in a storage path (such as /etc/resolve.conf) according to an operation file storage path of a DNS server program, modifying a DNS server address to point to a local IP address (such as 127.0.0.1), then enabling configuration service locally at the terminal according to the DNS server program, and simultaneously setting the DNS server program to automatically monitor the local IP address, wherein at this moment, the DNS server program monitors DNS ports and port numbers (such as 53) and receives the DNS resolution request transmitted by the local application program. Thereby one terminal transmits the domain name resolution request to the local DNS of each operator, further each link acquires an IP address of one CDN node, a plurality of links share data traffic, equivalently bandwidth is increased and the website access speed of the user is improved.

After the above-mentioned configuration is completed, a plurality of CDN nodes returned by the network side corresponding to the domain name resolution request can be acquired. In order to select the optimum one from the plurality of CDN nodes, in the embodiment of the present disclosure, further, for one link, transmission time of first test information transmitted to each CDN node through the link and receiving time of second test information returned by each CDN node and received through the link are determined; and the time delay of each CDN node corresponding to the link is determined according to the transmission time and the receiving time corresponding to each CDN.

Therein, the first test information in the embodiment of the present disclosure can be one of the follows:

a UDP (User Datagram Protocol) message, an ICMP (Internet Control Message Protocol) message and a TCP (Transmission Control Protocol) message.

The first test information therein includes identification information of transmission time that the terminal transmits the first test information. When the CDN nodes receive the first test information, the CDN nodes return fields containing the transmission time in the first test information, i.e., second test information to the terminal. Therefore, the difference between the time that the terminal receives the returned second test information and the transmission time in the second test information is the time delay between the terminal and the CDN nodes.

For example, if the transmitted first test information is an ICMP data packet, a data field icmp_data in the structure of the ICMP data packet is assigned with the current transmission time, the code of which is as follow:

```
time = (struct timeval *)pkt->icmp_data;
gettimeofday(time, NULL);
```

As described above, the icmp_data is assigned with the acquired current transmission time when the terminal transmits the data packet.

Since the ICMP protocol regulates that the servers return the icmp_data which remains unchanged after receiving the ICMP data packet, the DNS server of the network side returns the data field icmp_data after receiving the ICMP data packet. After the terminal receives the returned packet transmitted by the server, the terminal again calls a function gettimeofday to read the current receiving time and subtracts the transmission time of icmp_data in the returned data packet from the current receiving time so as to obtain the time delay of this data packet.

As shown in Fig. 1, the terminal transmits the first test information to two CDN nodes through the local DNS server of the operator China Mobile and acquires time delay of a link 1 and a link 2 (refer to dotted lines therein). Similarly, the terminal transmits the first test information to two CDN nodes through the local DNS server of the operator China Unicom and acquires time delay of a link 3 and a link 4 (refer to dotted lines therein).

The purpose of doing this is that the terminal can acquire the time delay of each link and each candidate CDN node by actively transmitting the test information, so as to facilitate subsequent screening.

Further, after the time delay of each link is determined, for one CDN node, the time delay of the CDN node corresponding to each link is averaged to obtain the time delay average value corresponding to the CDN node; or for one CDN node, the time delay of the CDN node corresponding to each link is weighed according to a weight of each link, and the weighted time delay is averaged to obtain the time delay average value corresponding to the CDN node.

For example, as shown in Fig. 1, the terminal determines the average time delay corresponding to the CDN node selected by the DNS server 1 by directly averaging the time delay of the link 1 and the link 3 and then performing averaging after weighing. Similarly, the terminal determines the average time delay corresponding to the CDN node selected by the DNS server 2 by directly averaging the time delay of the link 2 and the link 4.

For another example, as shown in Fig. 1, the terminal determines the average time delay corresponding to the CDN node selected by the DNS server 1 by weighing the time delay of the link 1 and the link 3 and then performing averaging. Similarly, the terminal determines the average time delay corresponding to the CDN node selected by the DNS server 1 by weighing the time delay of the link 2 and the link 4 and then performing averaging. If the weights are different, the results are different. Weight values can be selected according to different operators. For example, if the network signals of the operator China Mobile are better, it is considered to set a greater weight thereto. In addition, weights of different operators can be selectively different according to different geographical locations because there is a difference between networks in southern and northern areas.

Doing this achieves the effect that the time delay average value after all operator commonly select one CDN node can be obtained, wherein the time delay average value can be used as a screening index of CDN nodes.

After the average value of each CDN node is determined, in the embodiment of the present disclosure, further, one CDN node corresponding to the minimum time delay average value is selected from all CDN nodes.

Specifically, the CDN node which needs to be selected is determined according to formula [1] as follow:

$$minSrtt = \underset{x=1}{\overset{m}{Min}}\left( \left( \sum_{i=1}^{n} rtt_{xi} \right) / n \right) \quad \ldots\ldots[1]$$

wherein, $rtt_{xi}$ denotes time delay of xth CDN node corresponding to ith link, minSrtt denotes a selected CDN node with the minimum average value, n denotes the number of links and is an integer which is greater than 1, and m denotes the number of CDN nodes and is an integer which is greater than 1.

In addition to the above-mentioned method for selecting one CDN node corresponding to the minimum time delay average value, the CDN node can also be determined through the following method which includes the operations of:

> selecting N CDN nodes corresponding to the minimum time delay average value from all CDN nodes, and selecting one CDN node with the minimum current load from the N CDN nodes corresponding to the minimum time delay average value, wherein N is an integer which is greater than 1.

Specifically, the CDN node which needs to be selected is determined according to formula [2] as follow:

$$minSrtt = \underset{x=1}{\overset{m}{Min}} \left( \left( \sum_{i=1}^{n} P_i \times rtt_{xi} \right) / n \right) \quad \ldots\ldots[2]$$

wherein, $rtt_{xi}$ denotes time delay of xth CDN node corresponding to ith link, minSrtt denotes a selected CDN node with the minimum average value, n denotes the number of links and is an integer which is greater than 1, m denotes the number of CDN nodes and is an integer which is greater than 1, and $P_i$ denotes the weight of each link.

Accordingly, by selecting out the CDN node corresponding to the minimum time delay average value, when the terminal simultaneously uses links of different operators, the time delay of the CDN can be guaranteed to be the minimum, i.e., the optimal one is selected, and thereby the website access speed and service quality are improved.

Therein, an execution subject of the embodiment of the present disclosure can be a terminal, such as a mobile communication terminal which is installed with SIM cards of different operators, a mobile communication terminal which supports multi-link TCP or a tablet computer device which is installed with different network cards.

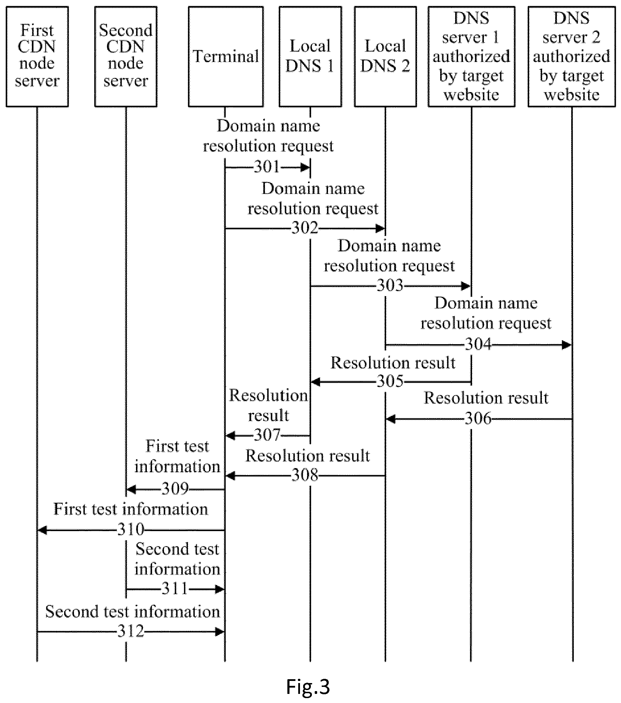

In order to systematically describe the method for selecting the CDN node, the embodiment of the present disclosure further provides Fig. 3 to describe the process of selecting the CDN node through an interaction diagram between a terminal and servers.

Operation 301 and operation 302: a terminal respectively transmitting a domain name resolution request of a target website to a local DNS server 1 and a local DNS server 2.

Operation 303 and operation 304: the local DNS server 1 and the local DNS server 2 respectively transmitting the domain name resolution request to a DNS server 1 authorized by the target website and a DNS server 2 authorized by the target website.

Operation 305 and operation 306: the DNS server 1 authorized by the target website and the DNS server 2 authorized by the target website respectively returning resolution results and IP addresses of selected CDN nodes to the local DNS server 1 and the local DNS server 2.

Operation 307 and operation 308: the local DNS server 1 and the local DNS server 2 respectively returning the above-mentioned results to the terminal.

Operation 309 and operation 310: the terminal respectively transmitting first test information to a first CDN node server and a second CDN node server according to the acquired IP addresses of the CDN nodes.

Operation 311 and operation 312: the first CDN node server and the second CDN node server respectively returning the second test information, the terminal obtaining time delay average values according to transmitted and returned information and further selecting one CDN node corresponding to the minimum time delay average value.

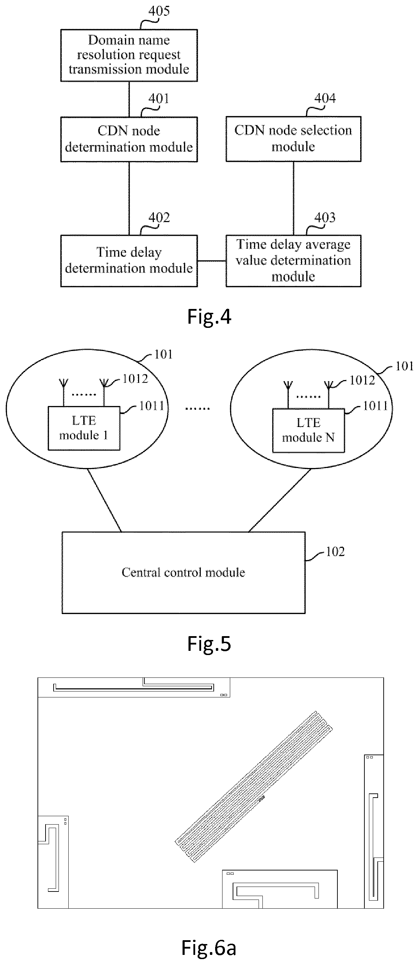

Based on the same disclosure concept, the embodiment of the present disclosure further provides a device for selecting a CDN node. As shown in Fig. 4, the device includes: a CDN node determination module 401, a time delay determination module 402, a time delay average value determination module 403 and a CDN node selection module 404, wherein

the CDN node determination module 401 is configured for, after initiating a domain name resolution request through a plurality of links, determining a CDN node returned by a network side corresponding to the domain name resolution request;

the time delay determination module 402 is configured for, for one link, when it is determined that there are a plurality of CDN nodes, determining a time delay of each CDN node corresponding to the link;

the time delay average value determination module 403 is configured for, for one CDN node, determining a time delay average value corresponding to the CDN node according to the time delay between the CDN node and each of the links; and

the CDN node selection module 404 is configured for selecting one CDN node from all CDN nodes according to the determined time delay average value corresponding to the CDN node.

Further, in order to guarantee that one terminal can simultaneously use a plurality of links, the terminal needs to complete configuration in advance through a domain name resolution request transmission module 405, wherein the domain name resolution request transmission module 405 is configured for initiating the domain name resolution request through local domain name systems (DNS) corresponding to each link. Thereby one terminal transmits the domain name resolution request to the local DNS of each operator, further each link acquires an IP address of one CDN node, a plurality of links share data traffic, equivalently bandwidth is increased and the website access speed of the user is improved.

After the above-mentioned configuration is completed, a plurality of CDN nodes returned by the network side aiming at the domain name resolution request can be acquired. In order to select the optimum one from the plurality of CDN nodes, further, time delay of each link and each CDN node is determined through the time delay determination module 402, wherein the time delay determination module 402 is specifically configured for, aiming at one link, determining transmission time of first test information transmitted to each CDN node through the link and receiving time of second test information returned by each CDN node and received through the link; and determining the time delay of each CDN node corresponding to the link according to the transmission time and the receiving time corresponding to each CDN.

Specifically, the first test information can be one of a UDP (User Datagram Protocol) message, an ICMP (Internet Control Message Protocol) message and a TCP (Transmission Control Protocol) message. The first test information therein includes identification information of transmission time that the terminal transmits the first test information. When the CDN nodes receive the first test information, the CDN nodes return fields containing the transmission time in the first test information, i.e., second test information to the terminal. Therefore, the difference between the time that the terminal receives the returned second test information and the transmission time in the second test information is the time delay between the terminal and the CDN nodes.

For example, if the transmitted first test information is an ICMP data packet, a data field icmp_data in the structure of the ICMP data packet is assigned with the current transmission time, the DNS server of the network side returns the data field icmp_data after receiving the ICMP data packet, the terminal subtracts the transmission time of icmp_data from the receiving time and thereby the time delay of the ICMP data packet can be obtained.

As shown in Fig. 1, the terminal transmits the first test information to two CDN nodes through the local DNS server of the operator China Mobile and acquires time delay of a link 1 and a link 2 (refer to dotted lines therein). Similarly, the terminal transmits the first test information to two CDN nodes through the local DNS server of the operator China Unicom and acquires time delay of a link 3 and a link 4 (refer to dotted lines therein).

The purpose of doing this is that the terminal can acquire the time delay of each link and each candidate CDN node by actively transmitting the test information, so as to facilitate subsequent screening.

Further, after the time delay of each link is determined, the time delay average value corresponding to each CDN node is obtained through the time delay average value determination module 403, wherein the time delay average value determination module 403 is specifically configured for:

for one CDN node, averaging the time delay of the CDN node corresponding to each link to obtain the time delay average value corresponding to the CDN node; or

for one CDN node, weighing the time delay of the CDN node corresponding to each link according to a weight of each link, and averaging the weighted time delay to obtain the time delay average value corresponding to the CDN node.

Specifically, as shown in Fig. 1, the terminal determines the average time delay corresponding to the CDN node selected by the DNS server 1 by directly averaging the time delay of the link 1 and the link 3 or performing averaging after weighing. Similarly, the terminal determines the average time delay corresponding to the CDN node selected by the DNS server 2 by directly averaging the time delay of the link 2 and the link 4 or performing averaging after weighing. Doing this achieves the effect that the time delay average value after all operators commonly select one CDN node can be obtained, wherein the time delay average value can be used as a screening index of CDN nodes.

After the average value of each CDN node is determined, in the embodiment of the present disclosure, further, the CDN node corresponding to the minimum time delay average value is selected through the CDN node selection module 404, wherein the CDN node selection module 404 is specifically configured for:

selecting one CDN node corresponding to the minimum time delay average value from all CDN nodes; or

selecting N CDN nodes corresponding to the minimum time delay average value from all CDN nodes, and selecting one CDN node with the minimum current load from the N CDN nodes corresponding to the minimum time delay average value, wherein N is an integer which is greater than 1.

Specifically, the CDN node which needs to be selected is determined according to formula [1] or formula [2], which is not repetitively described here.

Accordingly, by selecting out the CDN node corresponding to the minimum time delay average value, when the terminal simultaneously uses links of different operators, the time delay of the CDN can be guaranteed to be the minimum, i.e., the optimal one is selected, and thereby the website access speed and service quality are improved.

It needs to be stated that relevant modules in the embodiment of the present disclosure can be realized through hardware processors.

To sum up, in the embodiment of the present disclosure, on one hand, the terminal obtains the plurality of CDN nodes returned the network side corresponding to the domain name resolution request by initiating the domain name resolution request through the plurality of links; and on the other hand, the terminal obtains the time delay of each CDN node corresponding to each link by transmitting test information to each CDN node and further selects one CDN node corresponding to the minimum time delay average value from the CDN nodes as the CDN node which needs to be selected, such that the time delay is reduced by dispatching the CDN node to perform data transmission and the access speed and service quality are improved.

During implementation, the terminal in the embodiment of the present disclosure can be a mobile device, such as a mobile phone or a tablet computer, and can also be a vehicle-carried mobile device. By applying the solution provided by the embodiment of the present disclosure to the vehicle-carried mobile device, data can be transmitted through a plurality of virtual links, the utilization rate of bandwidth in a vehicle-carried system is improved, the network transmission speed of the vehicle-carried system can be faster that the network transmission speed of antenna systems in 2G and 3G modes, thereby high-speed network transmission can be provided for vehicles and activities such as conducting vehicle-carried video conversation and viewing high-definition videos can be realized.

With respect to a structure of a terminal corresponding to the above-mentioned device in the above-mentioned embodiment, a reference can be made to structures of vehicle-carried systems described in the following embodiment.

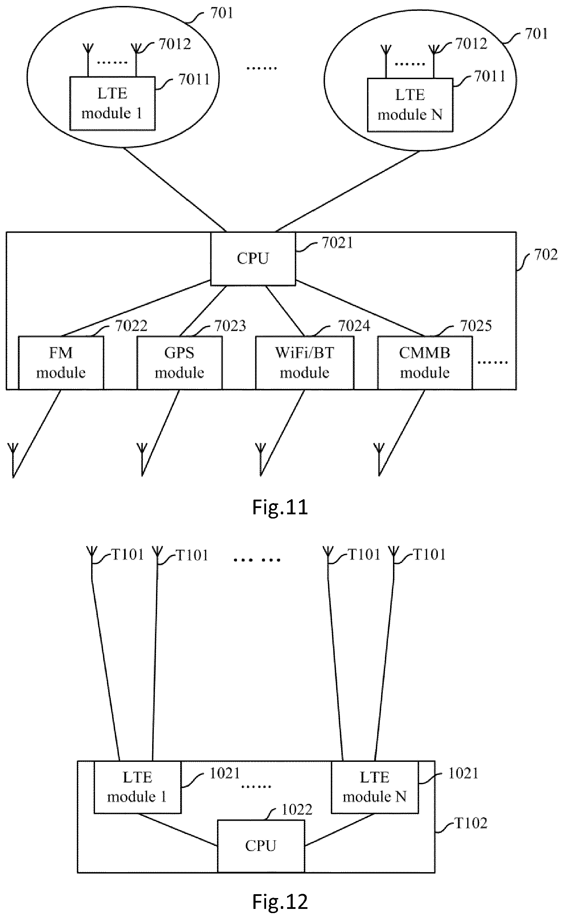

Structures of two vehicle-carried systems are provided in the embodiment below, wherein Figs. 5-11 are descriptions aiming at a first vehicle-carried system; and Figs. 12-23 are descriptions aiming at a second vehicle-carried system.

Fig. 5 shows a schematic structure of a vehicle-carried antenna structure. As shown in Fig. 5, the vehicle-carried antenna system includes:

a central control module 102 and a plurality of LTE modules 101, wherein each LTE module 101 comprises an LTE module 1011 and at least one antenna module 1012, the LTE module 1011 is connected with the antenna module 1012, and the central control module 102 is connected with each LTE module 101.

The central control module 102 comprises all modules as shown in Fig. 4, and information is transmitted or received through the LTE modules 101 when the information needs to be transmitted or received.

The LTE modules 101 perform transmission processing to information which is output by the central control module 102 and needs to be transmitted and then outwards transmit the information, and perform receiving processing to received information and then output the information to the central control module 102.

The LTE module 1011 in each LTE module 101 can perform 2G (second generation mobile communication), 3G (third generation mobile communication) and 4G (fourth generation mobile communication). The LTE module 1011 can receive and transmit signals through the antenna module 1012 corresponding thereto to perform communication with an external network.

As shown in Fig. 5, each of the plurality of LTE modules 101 corresponds to one LTE module 1011, the LTE module 1011 is connected with two antenna modules 1012, the LTE module 1011 can also be connected with one antenna module 1012, and the more the connected antenna modules 1012 are, the better the communication performance of the LTE module 1011 is.

In a scenario of only one LTE module 101, the network transmission speed of the vehicle-carried antenna system can be faster than the network transmission speed of an antenna system in 2G or 3G mode. In a scenario of a plurality of LTE modules 101, due to multi-carrier aggregation, high-speed network transmission can be provided for vehicles through the plurality of LTE modules 101 in the vehicle-carried antenna system, so as to realize activities such as conducting vehicle-carried video conversion and viewing high-definition videos in the vehicles. Compared with the prior art, the embodiment of the present disclosure improves the network transmission speed.

The LTE module 1011 can be arranged on a PCB (Printed Circuit Board). By integrating the LTE module 1011 on the PCB, an antenna feed point of the antenna module 1012 can be in press fit with an antenna feed point on the PCB and then is electrically connected with the corresponding LTE module 1011 thereto through wiring on the PCB.

Manufacturing processes of the antenna module 1012 are various. The manufacturing processes of the antenna module 1012 in the embodiment of the present disclosure at least include the follows:

Solution I

The antenna module 1012 is fixed on an antenna support of the PCB, the antenna module 1012 is supported through the antenna support, the antenna support is fixed on the PCB, and the antenna feed point of the antenna module 1012 can be in press fit with the antenna feed point on the PCB.

Solution II

The antenna module 1012 is formed by etching an FPC (Flexible Printed Circuit Board). By exposing the FPC masked by a mask with an antenna pattern and then etching a metallic layer on the exposed FPC, a labyrinth antenna module 1012 can be manufactured. The antenna module 1012 manufactured by adopting an FPC process has a small structural space and is convenient to mount. The FPC can be bonded onto a structure case such as a case of the LTE module 101 through back adhesive, the position can be located on an outer side of a nonmetallic portion of the outer case of the module, can also be located on an inner side of the nonmetallic portion of the outer case and can further be located on a surface of a nonmetallic middle case, and the FPC can also be bonded on the PCB. This antenna module 1012 has the advantages of high wiring density, light weight, easiness in bending and the like.

Solution III

The antenna module 1012 is formed on a case of a structural member through laser etching by LDS (Laser Direct Structuring). By using the LDS process, metallic powder can be laser-etched to a case of any structural member, such as the case of the LTE module 101, and the position can be located on the outer side of the nonmetallic portion of the outer case of the module, can also be located on the inner side of the nonmetallic portion of the outer case and can further be located on the surface of the nonmetallic middle case. The antenna pattern of this antenna module 1012 can be freely designed and is laser-etched onto the case of the structural member in any shape, the limitation of product structure shape does not exist and the flexibility is higher. Not only the interference of metals in the LTE module 101 can be avoided, but also the size of the LTE module 101 can be reduced.

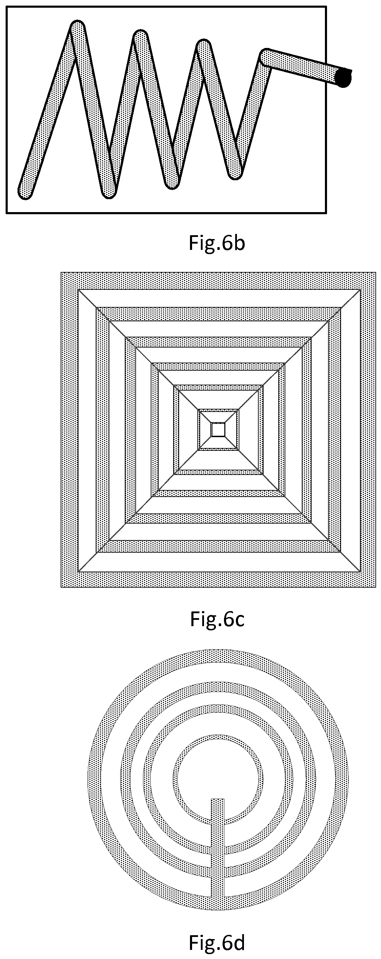

Correspondingly, the embodiment of the present disclosure further provides structural schematic diagrams of a plurality of antenna modules 1012, as shown in Figs. 6a-6d. Fig. 6a shows a sectional view of an antenna module 1012, i.e., a sectional view of the antenna module 1012. From Fig. 6a, it can be seen that a pattern structure of the antenna module 1012, i.e., the pattern structure of the antenna module 1012 is printed on the FPC. Fig. 6b shows an antenna module 1012 which is manufactured by using the FPC, wherein a dark point therein is an antenna feed point. Figs. 6c and 6d respectively show antenna patterns of two antenna modules 1012, which are respectively a circular ring structure and a roundabout structure. When the antenna modules 1012 are manufactured, the two patterns can be designed, and etching is performed on the FPC according to the patterns to obtain the antenna modules 1012, or the two patterns can be laser-etched through LDS by using metallic powder. The patterns of the antenna modules 1012 can be freely designed during actual application.

The above-mentioned three solutions for manufacturing the antenna module 1012 are just examples in the embodiment of the present disclosure, it is not indicated that the manufacturing processes of the antenna module 1012 are only limited to the above-mentioned solutions, and no limitation is made thereto in the embodiment of the present disclosure.

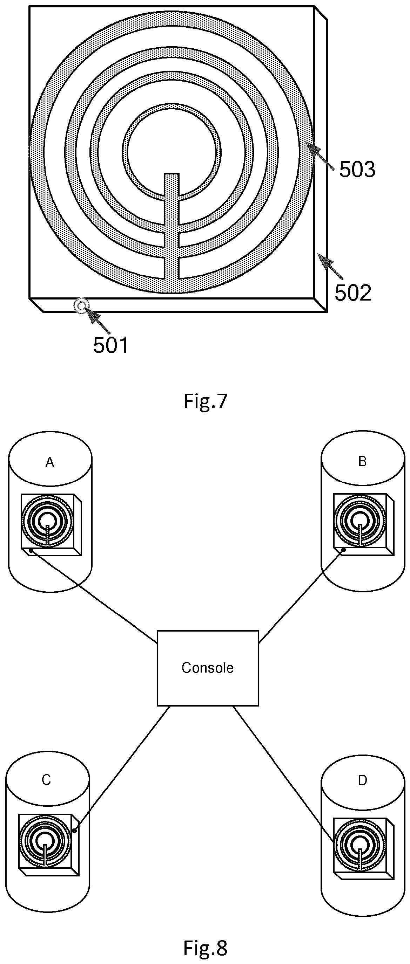

Each LTE module 101 in the embodiment of the present disclosure can be designed on a separate module box. Fig. 7 shows a schematic diagram for forming the LTE module 101. As shown in Fig. 7, the antenna module 1012 is laser-etched at a top of the box by using LDS, for example, an antenna pattern 503. The LTE module 1011 in the LTE module 101 can be interconnected and communicated with the central control module 102 through a USB wire harness. Each box comprises a box body 502 and is provided with a reserved USB interface 501, wherein the USB interface is compatible with various USB versions. The USB version used in the embodiment of the present disclosure is USB3.0. The LTE module 101 and the central control module 102 realize communication and power supply through a USB3.0 wire harness. The module box therein further includes a main antenna and an auxiliary antenna of the LTE module 1011 for receiving and transmitting signals. The antennas can be designed to be directional antennas respectively with a radiation angle which is smaller than or equal to 180°. Thereby the actual design radiation surface position of the antenna can be determined according to the surrounding environments of different mounting positions.

The shape of each box can be designed according to the actual application and is not limited to be cuboid. In addition, the antenna module 1012 can also be laser-etched on four sides of the module box according to the actual application, the antenna is designed to be a directional antenna and the radiation surface of the antenna module 1012 can be designed according to different mounting positions. In the embodiment of the present disclosure, preferably, the position of the antenna module 1012 is arranged in an area of one side, face to a passenger, of the module box, i.e., the antenna module 1012 is laser-etched at the top of the module box or is arranged at a position of four sides of the module box.

In order to more favorably enable the vehicle-carried antenna system to perform high-speed communication, a plurality of LTE modules 101 can be mounted at different positions on a vehicle, such as mounting positions of LTE modules 101 as shown in Fig. 8, and the LTE modules 101 can be mounted in a column A, a column B, a column C and a column D of the vehicle. Then, the LTE modules 101 are respectively connected to the central control module 102 of a vehicle console through a USB to realize communication with the central control module 102.

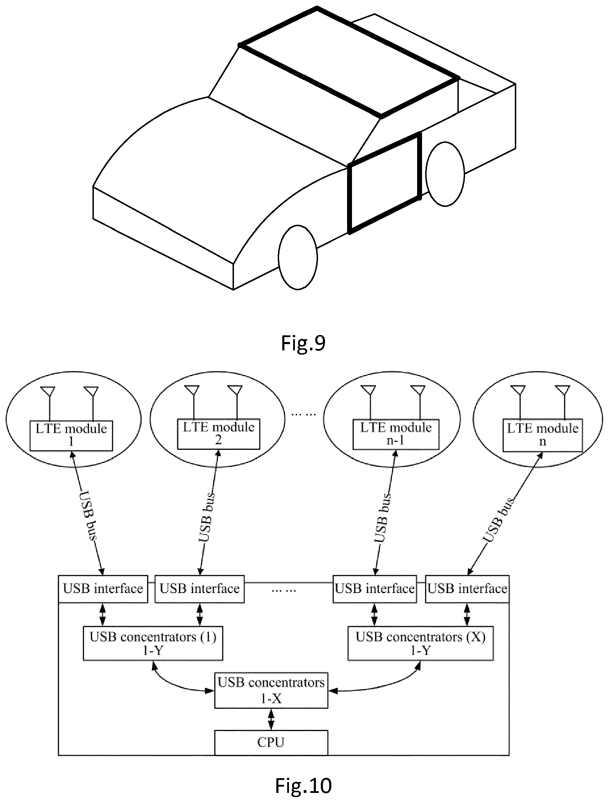

In the embodiment of the present disclosure, the LTE modules 101 can also be located at one or any combination of positions outside a roof of the vehicle, on inner sides of doors of the vehicles, and in a platform at the bottom of a front windscreen of the vehicle, a platform at the bottom of a rear windscreen of the vehicle and rearview mirrors of the vehicle. If the number of the LTE modules 101 which are needed by the vehicle is great, a plurality of LTE modules 101 can be arranged at the same position. The more the used LTE modules 101 are, the better the quality of high-speed communication is. As shown in Fig. 9, the LTE modules 101 can be mounted outside a roof of the vehicle in a rough black line area and on inner sides of doors of the vehicle in Fig. 9.

In Fig. 5, N LTE modules 101 are provided. The N LTE modules 101 are respectively connected with the central control module 102. The more the LTE modules 101 connected with the central control module 102 are, the better the performance of the vehicle-carried terminal is, such that high-speed communication such as 10 GB/s and 20 GB/s high-speed communication can be realized. Signals received by the LTE modules 101 are transmitted to the central control module 102 for processing.

In the embodiment of the present disclosure, the central control module 102 is connected with each LTE module 101 through a USB (Universal Serial Bus). Both the central control module 102 and the LTE modules 101 are provided with USB interfaces. The USB is respectively connected with the USB interfaces of the central control module 102 and the LTE modules 101.

Since the antenna system of the vehicle in the prior art adopts a single-antenna design solution, if various signals need to be received, a plurality of antennas need to be simultaneously mounted on the vehicle, these antennas need to be mounted outside of the roof of the vehicle and thereby the instability of the vehicle is increased. Compared with the prior art, by integrating the LTE modules 1011 and the antenna modules 1012 in the LTE modules in the embodiment of the present disclosure, the LTE modules 101 can be arranged at a plurality of positions on the vehicles and do not need to be mounted only outside of the roof of the vehicle, and thus the stability of the vehicle is improved.

As shown in Fig. 10, the embodiment of the present disclosure provides a connection mode for the central control module 102 and the LTE modules 101. Each LTE module 101 is connected with the USB interface in the central control module 102 through the USB, and one LTE module 101 corresponds to one USB interface. In the central control module 102, a plurality of USB interfaces are connected with USB concentrators, the number of USB interfaces which each USB concentrator can be connected with is Y and Y is greater than or equal to 1. For example, four USB interfaces can be connected with one USB concentrator. The number of the USB concentrators is X, X is greater than or equal to 1, and the X USB concentrators are gathered on one USB concentrator and are connected with the CPU of the central control module 102 through the mater USB concentrator.

In the embodiment of the present disclosure, if it is needed during networking, more LTE modules 101 can be configured for combination and a plurality of LTE modules 101 are scattered at various positions on the vehicles to reduce the assembling difficulty of the antenna system in the vehicle-carried antenna system and to facilitate flexible combination. If it is needed, the designed LTE module 101 boxes only need to be connected with the central control module 102 in the console. In addition, the USB is configured for communication with the central control module 102. Compared with the traditional design, the radio-frequency power loss caused by coaxial cables can be effectively reduced, the radio-frequency performance can be improved and the constraint of length of wire harnesses between the LTE modules 101 and the central control module 102 can be reduced, such that the mounting positions of the LTE modules 101 can be more flexibly selected.

Correspondingly, the embodiment of the present disclosure further provides a structure of a vehicle-carried antenna system. In the structure as shown in Fig. 11, the vehicle-carried antenna system includes a central control module 702 and a plurality of LTE modules 701, wherein each LTE module 701 includes an LTE module 7011 and at least one antenna module 7012, the LTE module 7011 is connected with the antenna module 7012 and the central control module 7021 is connected with each LTE module 701.

The central control module 702 comprises all modules as shown in Fig. 4, and information is transmitted or received through the LTE modules 701 when the information needs to be transmitted or received.

A PCB of the central control module 702 thereon is provided with a CPU 7021, an FM module 7022, a GPS module 7023, a WiFi/BT module 7024 and a CMMB module 7025. The vehicle-carried antenna system further includes an FM antenna, a GPS antenna, a WiFi/BT antenna and a CMMB antenna corresponding to the FM module 7022, the GPS module 7023, the WiFi/BT module 7024 and the CMMB module 7025. The FM antenna, the GPS antenna, the WiFi/BT antenna and the CMMB antenna are sequentially connected with the central control module 702 through coaxial cables and terminals.

The central control module 702 is connected with each LTE module 701 through a USB. Both the central control module 702 and the LTE modules 701 are provided with USB interfaces. The USB is respectively connected with the USB interfaces of the central control module 702 and the LTE modules 701. Based on the same disclosure concept, the embodiment of the present disclosure further provides an automobile, wherein the automobile includes the vehicle-carried antenna system, the specific structure of which has been described in the above-mentioned embodiment and thus is not repetitively described here.

By connecting with the central control module through the plurality of LTE modules, the function of high-speed communication of the vehicle-carried antenna is realized; and since the LTE modules and the antenna modules are of an integral structure, the plurality of LTE modules can be flexibly mounted and the problem of communication interference caused by a reason that the plurality of LTE modules are concentrated in the central control module is avoided.

The structure of another vehicle-carried system will be described below in detail.

Fig. 12 shows a structure of a vehicle-carried antenna system. As shown in Fig. 12, the vehicle-carried antenna system includes:

a central control module T102 and a plurality of antenna modules T101, wherein the central control module T102 includes a CPU 1022, a plurality of LTE modules 1021, each LTE module 1021 in the central control module T102 is connected with at least one antenna module T101 and the plurality of LTE modules 1021 are respectively connected with the CPU 1022.

The central control module T102 comprises all modules as shown in Fig. 4, and information is transmitted or received through the antenna modules T101 when the information needs to be transmitted or received.

The antenna modules T101 perform transmission processing to information which is output by the central control module T102 and needs to be transmitted and then outwards transmit the information, and perform receiving processing to received information and then output the information to the central control module T102.

The LTE modules 1021 can perform 2G (second generation mobile communication), 3G (third generation mobile communication) and 4G (fourth generation mobile communication) communication. Each LTE module 1021 can receive and transmit signals to perform communication with an external network through the corresponding antenna module T101 thereof.

As shown in Fig. 12, each LTE module 1021 of the plurality of LTE modules 1021 is connected with two antenna modules T101, which are respectively a main antenna and an auxiliary antenna. The LTE module 1021 can also be connected with one antenna module T101, and the more the connected antenna modules T101 are, the better the communication performance of the LTE module 1021 is.

In a scenario of only one LTE module 1021, the network transmission speed of the vehicle-carried antenna system can be faster than the network transmission speed of an antenna system in 2G or 3G mode. In a scenario of a plurality of LTE modules 1021 and a plurality of antenna modules T101, due to multi-carrier aggregation, high-speed network transmission can be provided for vehicles through the plurality of LTE modules 1021 and the plurality of antenna modules T101 in the vehicle-carried antenna system, so as to realize activities such as conducting vehicle-carried video conversion and viewing high-definition videos in the vehicles. Compared with the prior art, the embodiment of the present disclosure improves the network transmission speed.

Manufacturing processes of the antenna module T101 are various. The manufacturing processes of the antenna module T101 in the embodiment of the present disclosure at least include the follows:

Process I

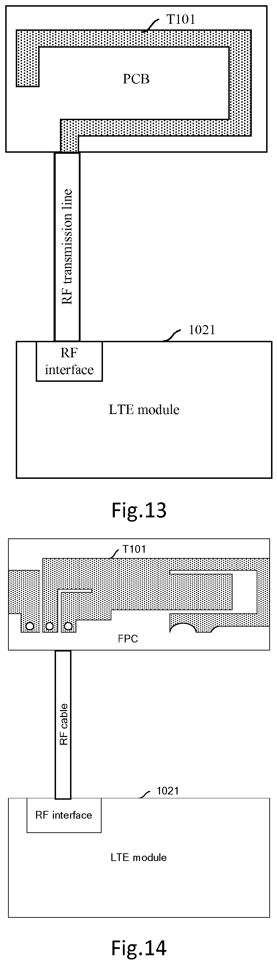

As shown in Fig. 13, the antenna module T101 is printed on a first PCB and a metallic layer of the first PCB is etched by adopting an etching method to obtain the antenna module T101. In addition, the pattern of the antenna module T101 can also be printed on the first PCB. The antenna module T101 is connected to an RF (Radio Frequency) interface through an RF transmission line, and the RF interface is connected with the LTE module 1021. The LTE module 1021 receives and transmits signals through the antenna module T101. This antenna module T101 has a simple overall structure and is convenient to mount.

Process II

As shown in Fig. 14, the antenna module T101 is formed by etching an FPC. By exposing the FPC masked by a mask with an antenna pattern and then etching a metallic layer on the exposed FPC, a labyrinth antenna module T101 can be manufactured. The antenna module T101 manufactured by adopting an FPC process has a small structural space and is convenient to mount. The FPC can be bonded onto, for example, a case of a console through back adhesive, the position can be located on an outer side of a nonmetallic portion of the case of the console and can also be located on an inner side of the nonmetallic portion of the console, and the FPC can also be bonded on the second PCB. The antenna module T101 can be connected to the RF interface through an RF cable and the RF interface is connected with the LTE module 1021. This antenna module T101 has the advantages of high wiring density, light weight, easiness in bending and the like.

Process III

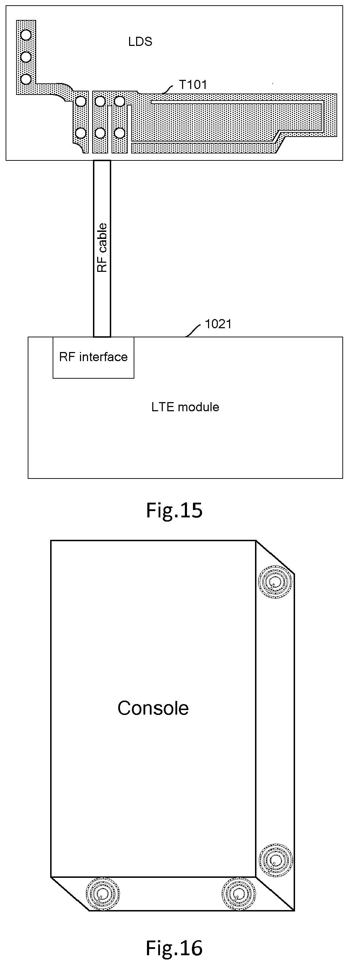

As shown in Fig. 15, the antenna module T101 is formed on a case of a structural member through laser etching by adopting LDS (Laser Direct Structuring). By using the LDS process, metallic powder can be laser-etched to a case of any structural member, such as the case of the console, and the position can be located on the outer side of the nonmetallic portion of the case of the console and can also be located on the inner side of the nonmetallic portion of the case. The antenna pattern of this antenna module T101 can be freely designed and is laser-etched onto the case of the structural member in any shape, the limitation of product structure shape does not exist and the flexibility is higher. Not only can the interference of metals in the LTE module 1021 be avoided, but also the size of the LTE module 1021 can be reduced. The antenna module T101 is connected to the RF interface through the RF cable and the RF interface is connected with the LTE module 1021.

In the embodiment of the present disclosure, the antenna module T101 can be arranged in the console. As shown in Fig. 16, the pattern of the antenna module T101 can be laser-etched onto the case of the console by adopting the LDS process, can be laser-etched on the outer side of the case of the console and can also be laser-etched on the inner side of the case of the console. If the case of the console is assembled with a central control main screen in a tandem staggered manner and the case is separately mounted, the antenna module T101 is arranged on four edges of one side, opposite to passengers, of the case.

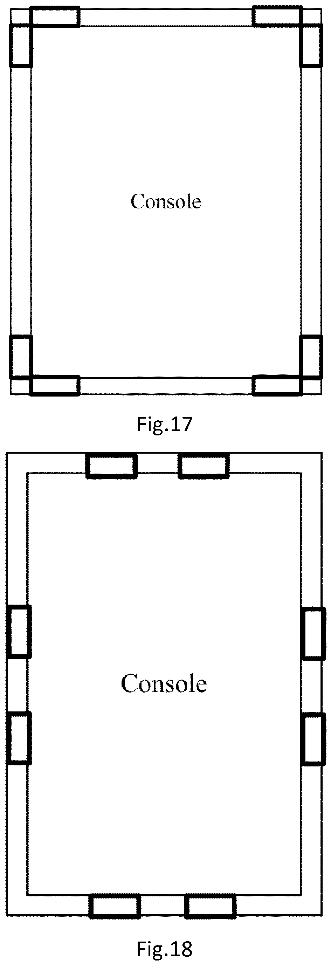

Specifically, in a structure of mounting positions of the antenna modules T101 as shown in Fig. 17, areas marked with thick black solid lines in Fig. 17 are positions at which the antenna modules T101 can be mounted, i.e., positions of four corners of four edges of the case of the console. Four antenna modules T101 (including main antennas and auxiliary antennas) are placed at totally eight positions of four corners, and the distance between the antenna modules T101 at the four corners is the longest. Although the distance between the main antenna and the auxiliary antenna of each antenna module T101 at each corner is not the longest, since the main antenna and the auxiliary are respectively mounted at a horizontal position and a vertical position, the isolation of polarization directions is facilitated, the effect that the isolation of the two antennas is very good can also be realized and thereby the communication performance is guaranteed.

In a structure of mounting positions of antenna modules T101 as shown in Fig. 18, areas marked by thick black solid lines in Fig. 18 are positions at which the antenna modules T101 can be mounted, i.e., four antenna modules T101 (including main antennas and auxiliary antennas) are placed at totally eight positions including 1/3 positions of each of four edges of the case of the console, thus the distance between the antennas can be the longest, thereby the isolation of the antennas is guaranteed and the communication performance is guaranteed.

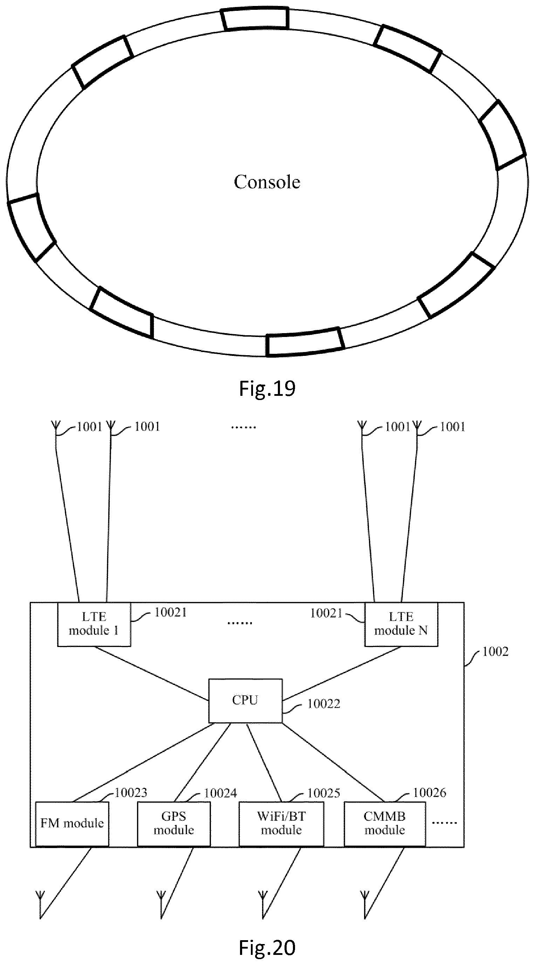

In a structure of mounting positions of antenna modules T101 as shown in Fig. 19, areas marked by thick black solid lines in Fig. 19 are positions at which the antenna modules T101 can be mounted. The console is elliptical, eight positions are equidistantly divided on the sides of the case of the console, four antenna modules T101 (including main antennas and auxiliary antennas) are placed at the eight positions, thus the distance between the antennas can be the longest, thereby the isolation of the antennas is guaranteed and the communication performance is guaranteed. If the console is circular, the antenna modules are mounted according to the above-mentioned method.

Since the antenna system of the vehicle in the prior art adopts a single-antenna design solution, if various signals need to be received, a plurality of antennas need to be simultaneously mounted on the vehicle, these antennas need to be mounted outside the roof of the vehicle and thereby the instability of the vehicle is increased. Compared with the prior art, the antenna modules T101 can be arranged on the console of the vehicles in the embodiment of the present disclosure and do not need to be mounted outside the vehicle, and thus the stability of the vehicle is improved.

The main antennas and the auxiliary antennas in the antenna modules T101 can be designed to be directional antennas respectively with a radiation angle which is smaller than or equal to 180°. Compared with the traditional automobile external antennas, the gains of the directional antennas are larger and the radiation efficiency can be improved. The radiation angle and direction of each antenna can be artificially designed. The radiation angle and direction of each antenna can be designed to face to areas such as windows which are not covered with metals according to the position of the actual central control module T102 in the vehicle body and the position of the antenna in the console. Compared with omnidirectional antennas, the signal transmission efficiency is higher and the communication effect is better.

In the embodiment of the present disclosure, the periphery of the case of the console can be four edge of a square case, and can also be the edge of a circular or elliptical case. The shape of the case of the console in the embodiment of the present disclosure is not limited to the above-mentioned shapes, which are just exemplary.

As shown in Fig. 12, the central control module T102 can be arranged on the second PCB, a plurality of LTE modules 1021 and the CPU 1022 are arranged on the second PCB, and the plurality of LTE modules 1021 are connected with the CPU 1022 through wiring on the second PCB. The LTE modules can also be arranged on a third PCB, and the LTE modules can be connected with the CPU 1022 in the central control module T102 on the second PCB through a MiniPCIE (Mini Peripheral Component Interconnect Express) interface or other PCI (Peripheral Component Interconnect) interface.

The central control module T102 includes N LTE modules 1021, the N LTE modules 1021 are respectively connected with the CPU 1022, and the more the LTE modules 1021 connected with the CPU 1022 are, the better the performance of the vehicle-carried antenna system is, such that high-speed communication such as 10Gb/s and 20Gb/s high-speed communication can be realized. Signals received by the LTE modules 1021 are transmitted to the CPU 1022 for processing.

In the embodiment of the present disclosure, by arranging the antenna modules T101 and the central control module T102 in the console, the design of wiring between the antenna modules T101 and the central control module T102 is simple, the wire harnesses are fewer and shorter, the loss during high-frequency energy transmission can be reduced and the excellent performance is guaranteed.

Correspondingly, the embodiment of the present disclosure further provides a vehicle-carried antenna system. In a structure as shown in Fig. 20, the vehicle-carried antenna system includes a central control module 1002 and a plurality of antenna modules 1001, the central control module 1002 includes a CPU 10022 and a plurality of LTE modules 10021, each LTE module 10021 in the central control module 1002 is connected with at least one antenna module 1001, and the plurality of LTE modules 10021 are respectively connected with the CPU 10022.

The central control module 1002 comprises all modules as shown in Fig. 4, and information is transmitted or received through the LTE modules 1001 when the information needs to be transmitted or received.

A second PCB of the central control module 1002 thereon is provided with a CPU 10022, an FM module10023, a GPS module 10024, a WiFi/BT module10025 and a CMMB module10026. The vehicle-carried antenna system further includes an FM antenna, a GPS antenna, a WiFi/BT antenna and a CMMB antenna corresponding to the FM module 10023, the GPS module 10024, the WiFi/BT module10025 and the CMMB module10026. The FM antenna, the GPS antenna, the WiFi/BT antenna and the CMMB antenna are sequentially connected with the central control module 1002 through RF transmission lines.

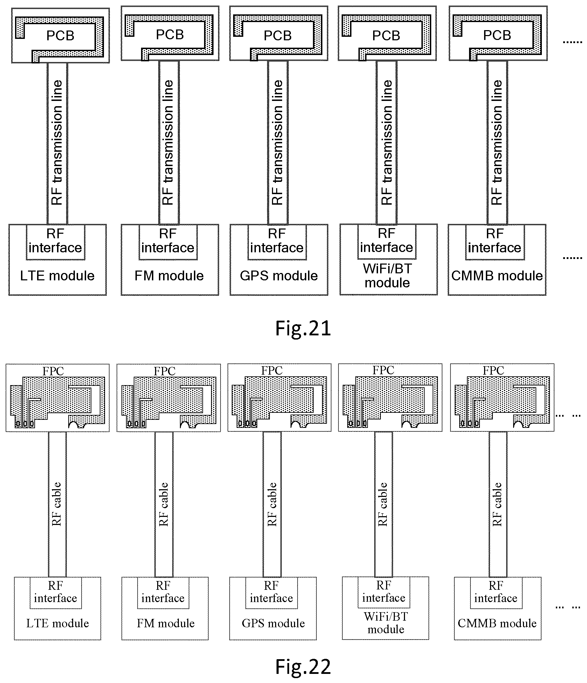

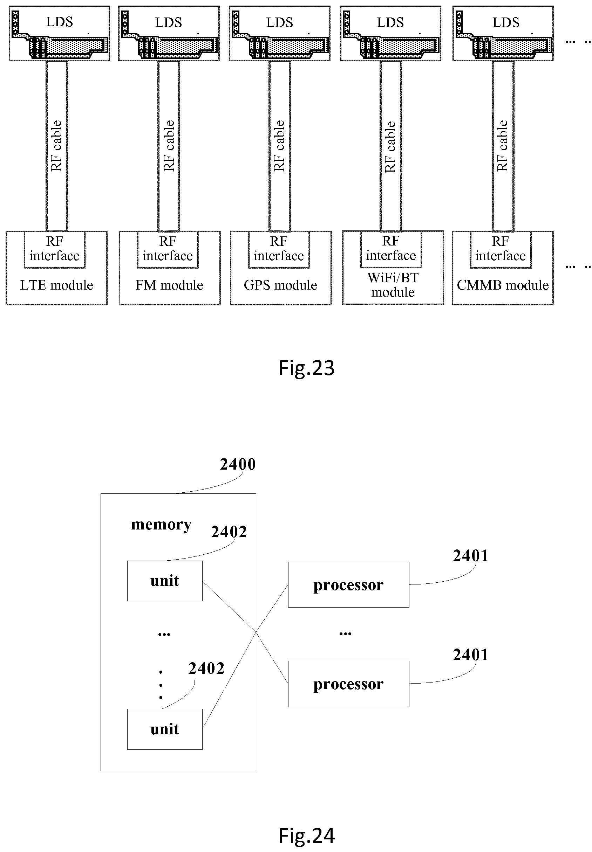

Figs. 21-23 respectively show structures of vehicle-carried terminals with the antenna modules 1001 which are manufactured respectively by adopting three design processes. The structure in Fig. 21 is a structure of the vehicle-carried antenna system with the antenna modules 1001 which are manufactured by adopting a PCB process. The structure in Fig. 22 is a structure of the vehicle-carried antenna system with the antenna modules 1001 which are manufactured by adopting an FPC process. The structure in Fig. 23 is a structure of the vehicle-carried antenna system with the antenna modules 1001 which are manufactured by adopting an LDS process. The specific structures of the vehicle-carried antenna systems in Figs. 21-23 have been described in the above-mentioned embodiments and thus are not repetitively described here.

In a particular implementation, as illustrated in Fig. 24, there is a schematic diagram of a device for selecting a CDN node according to an embodiment of the present disclosure, which can include:

one or more processor 2401; and
a memory 2400, wherein, the memory 2400 includes:

one or more unit 2402, the one or more unit 2402 are stored in the memory 2400, and the one or more units 2402 are configured to be executed by the one or more processors 2401 to perform: after initiating a domain name resolution request through a plurality of links, determining a CDN node returned by a network side corresponding to the domain name resolution request; for one link, when it is determined that there are a plurality of CDN nodes, determining a time delay of each CDN node corresponding to the link; for one CDN node, determining a time delay average value corresponding to the CDN node according to the time delay between the CDN node and each of the links; and selecting one CDN node from all CDN nodes according to the determined time delay average value corresponding to the CDN node.

A computer program product is provided by an embodiment of the present disclosure, the computer program product is used in combination of the device for selecting a CDN node, the computer program product includes computer readable memory media and computer program, the computer program includes instructions which is configured to perform: after initiating a domain name resolution request through a plurality of links, determining a CDN node returned by a network side corresponding to the domain name resolution request; for one link, when it is determined that there are a plurality of CDN nodes, determining a time delay of each CDN node corresponding to the link; for one CDN node, determining a time delay average value corresponding to the CDN node according to the time delay between the CDN node and each of the links; and selecting one CDN node from all CDN nodes according to the determined time delay average value corresponding to the CDN node.

Based on the same disclosure concept, the embodiment of the present disclosure further provides an automobile, wherein the automobile includes the vehicle-carried antenna system, the specific structure of which has been described in the above-mentioned embodiments and thus is not repetitively described here.

In the vehicle-carried antenna system provided by the embodiment of the present disclosure, by connecting with the plurality of LTE modules of the central control module through the plurality of antenna modules, the function of high-speed communication of the vehicle-carried antenna is realized; and since the LTE modules are arranged in the central control module, the length of the wire harnesses is reduced, the signal attenuation can be reduced, the transmission efficiency is improved and the power consumption is reduced.

The device embodiments described above are just exemplary. Modules which are described therein as discrete components may be or may not be physically separated components, components displayed as modules may be or may not be physical modules and the components can be located at the same place or can be distributed in a plurality of network modules. Partial or all modules therein can be selected according to the actual needs to realize the purpose of the solutions of the embodiments. One skilled in the art can understand and implement the present disclosure without contributing any inventive labor.

Through the description of the above-mentioned embodiments, one skilled in the art can clearly understand that each embodiment can be realized by means of software in combination with necessary general hardware platforms and can also be realized by means of hardware. Based on such understanding, the essential part of the above-mentioned technical solutions or the part which makes a contribution to the prior art can be reflected in the form of software products. Computer software products can be stored in computer readable storage media such as ROM/RAM, discs and compact discs, and comprise a plurality of instructions which are configured for enabling a computer device (which can be a personal computer, a server or a network device) to execute the method described in each embodiment or a certain part of each embodiment.

Finally, it needs to be stated that the above-mentioned embodiments are just configured for describing instead of limiting the technical solutions of the present disclosure; although the present disclosure is described in detail by referring to the above-mentioned embodiments, one skilled in the art should understand that modifications can be made to the technical solutions recorded in the above-mentioned embodiments or equivalent replacements can be made to partial technical features therein; and however, such modifications or replacements do not enable the essences of the corresponding technical solutions to depart from the spirit and the range of the technical solution of each embodiment.

**Claims**

1. A method for selecting a content delivery network (CDN) node, wherein the method comprises:

after initiating a domain name resolution request through a plurality of links, determining a CDN node returned by a network side corresponding to the domain name resolution request;
for one link, when it is determined that there are a plurality of CDN nodes, determining a time delay of each CDN node corresponding to the link;
for one CDN node, determining a time delay average value corresponding to the CDN node according to the time delay between the CDN node and each of the links; and
selecting one CDN node from all CDN nodes according to the determined time delay average value corresponding to the CDN node.

2. The method of claim 1, wherein determining the time delay of each CDN node corresponding to the link comprises:

for one link, determining a transmission time of a first test information transmitted to each CDN node through the link and a receiving time of a second test information returned by each CDN node and received through the link; and
determining the time delay of each CDN node corresponding to the link according to the transmission time and the receiving time corresponding to each CDN.

3. The method of claim 1, wherein determining the time delay average value corresponding to the CDN node comprises:

for one CDN node, averaging the time delay of the CDN node corresponding to each link to obtain a time delay average value corresponding to the CDN node; or
for one CDN node, weighing the time delay of the CDN node corresponding to each link according to a weight of each link, and averaging the weighted time delay to obtain the time delay average value corresponding to the CDN node.

4. The method of claim 1, wherein selecting one CDN node from all CDN nodes according to the time delay average value corresponding to the CDN node comprises:

selecting one CDN node corresponding to a minimum time delay average value from all CDN nodes; or selecting N CDN nodes corresponding to the minimum time delay average value from all CDN nodes, and selecting one CDN node with a minimum current load from the N CDN nodes corresponding to the minimum time delay average value, wherein N is an integer which is greater than 1.

5. The method of claim 1, wherein initiating the domain name resolution request through a plurality of links comprises:

initiating the domain name resolution request through local domain name systems (DNS) corresponding to each link.

6. A device for selecting a content delivery network (CDN) node, wherein the device comprises: a CDN node determination module, a time delay determination module, a time delay average value determination module and a CDN node selection module, wherein

the CDN node determination module is configured, after initiating a domain name resolution request through a plurality of links, to determine a CDN node returned by a network side corresponding to the domain name resolution request;
the time delay determination module is configured, for one link, when it is determined that there are a plurality of CDN nodes, to determine a time delay of each CDN node corresponding to the link;
the time delay average value determination module is configured, for one CDN node, to determine a time delay average value corresponding to the CDN node according to the time delay between the CDN node and each of the links; and
the CDN node selection module is configured for selecting one CDN node from all CDN nodes according to the determined time delay average value corresponding to the CDN node.

7. The device of claim 6, wherein the time delay determination module is further configured :

for one link, to determine a transmission time of a first test information transmitted to each CDN node through the link and a receiving time of a second test information returned by each CDN node and received through the link; and

to determine the time delay of each CDN node corresponding to the link according to the transmission time and the receiving time corresponding to each CDN.

8. The device of claim 6, wherein the time delay average value determination module is further configured :

for one CDN node, to average the time delay of the CDN node corresponding to each link to obtain a time delay average value corresponding to the CDN node; or

for one CDN node, to weight the time delay of the CDN node corresponding to each link according to a weight of each link, and to average the weighted time delay to obtain the time delay average value corresponding to the CDN node.

9. The device of claim 6, wherein the CDN node selection module is further configured:

to select one CDN node corresponding to a minimum time delay average value from all CDN nodes; or to select N CDN nodes corresponding to the minimum time delay average value from all CDN nodes, and to select one CDN node with a minimum current load from the N CDN nodes corresponding to the minimum time delay average value, wherein N is an integer which is greater than 1.

10. The device of claim 6, the device further comprises a domain name resolution request transmission module, configured to initiate the domain name resolution request through local domain name systems (DNS) corresponding to each link.

Fig.1

| After initiating a domain name resolution request through a plurality of links, determining CDN nodes returned by a network side aiming at the domain name resolution request | ~S101 |

| For each link, when it is determined that there are a plurality of CDN nodes, determining a time delay of each CDN node corresponding to the link | ~S102 |

| For each CDN node, determining a time delay average value corresponding to the CDN node according to time delays between the CDN node and each link | ~S103 |

| Selecting one CDN node from all CDN nodes according to the determined time delay average value corresponding to each CDN node | ~S104 |

Fig.2

| First CDN node server | Second CDN node server | Terminal | Local DNS 1 | Local DNS 2 | DNS server 1 authorized by target website | DNS server 2 authorized by target website |

Domain name resolution request
—301—►

Domain name resolution request
—302—

Domain name resolution request
—303—

Domain name resolution request
—304—

Resolution result
—305—

Resolution result
—307—

First test information
—309—

Resolution result
—308—

Resolution result
—306—

First test information
—310—

Second test information
—311—►

Second test information
—312—►

Fig.3

405

Domain name
resolution request
transmission module

401

CDN node
determination module

404

CDN node selection
module

402

Time delay
determination module

403

Time delay average
value determination
module

Fig.4

101

1012

1011

LTE
module 1

......

101

1012

1011

LTE
module N

102

Central control module

Fig.5

Fig.6a

Fig.6b

Fig.6c

Fig.6d

Fig.7

Fig.8

Fig.9

Fig.10

Fig.11

Fig.12

PCB

T101

RF transmission line

RF interface

1021

LTE module

Fig.13

T101

FPC

RF cable

RF interface

1021

LTE module

Fig.14

LDS

T101

RF cable

1021

RF interface

LTE module

Fig.15

Console

Fig.16

Fig.17

Fig.18

Console

Fig.19

1001    1001    ......    1001    1001

LTE
module 1    10021    ......    10021    LTE
module N

1002

CPU    10022

10023    10024    10025    10026

FM module    GPS
module    WiFi/BT
module    CMMB
module    ......

Fig.20

PCB ...... PCB PCB PCB PCB ......

RF transmission line

RF transmission line

RF transmission line

RF transmission line

RF transmission line

RF interface

RF interface

RF interface

RF interface

RF interface ......

LTE module

FM module

GPS module

WiFi/BT module

CMMB module

Fig.21

FPC FPC FPC FPC FPC ... ...

RF cable

RF cable

RF cable

RF cable

RF cable

RF interface

RF interface

RF interface

RF interface

RF interface ... ...

LTE module

FM module

GPS module

WiFi/BT module

CMMB module

Fig.22

| LDS | LDS | LDS | LDS | LDS | ... .. |
|-----|-----|-----|-----|-----|--------|

RF cable | RF cable | RF cable | RF cable | RF cable

| RF interface | RF interface | RF interface | RF interface | RF interface | ... .. |
| LTE module | FM module | GPS module | WiFi/BT module | CMMB module | |

Fig.23

2400

memory 2402

unit

... 2401

processor

...

. 2402

.
.
.

unit

processor 2401

Fig.24

# INTERNATIONAL SEARCH REPORT

| International application No. |
| --- |
| **PCT/CN2016/082145** |

**A. CLASSIFICATION OF SUBJECT MATTER**

H04L 29/08 (2006.01) i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, WPI, EPODOC: domain name, analysis, content, deliver, network, transmission, transfer, domain, name, server, DNS, request, CDN, node, time, delay, link, multiple, first, second, average, mean, choose, select, test, receive, send, weight, minimum, optimal

**C. DOCUMENTS CONSIDERED TO BE RELEVANT**

| Category* | Citation of document, with indication, where appropriate, of the relevant passages | Relevant to claim No. |
| --- | --- | --- |
| X | CN 103037025 A (HARBIN UNIVERSITY OF SCIENCE AND TECHNOLOGY), 10 April 2013 (10.04.2013), description, paragraphs [0019]-[0023], and figure 3 | 1-10 |
| A | CN 102148752 A (HUAWEI TECHNOLOGIES CO., LTD.), 10 August 2011 (10.08.2011), the whole document | 1-10 |
| A | CN 101287011 A (CHINACACHE NETWORK TECHNOLOGY (BEIJING) LIMITED), 15 October 2008 (15.10.2008), the whole document | 1-10 |
| A | CN 102368776 A (UNIVERSITY OF SCIENCE AND TECHNOLOGY OF CHINA), 07 March 2012 (07.03.2012), the whole document | 1-10 |
| A | US 2010088405 A1 (MICROSOFT CORPORATION), 08 April 2010 (08.04.2010), the whole document | 1-10 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 June 2016 (21.06.2016) | **21 July 2016 (21.07.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Xue** Telephone No.: (86-10) **62413463** |
| --- | --- |

Form PCT/ISA/210 (second sheet) (July 2009)

## INTERNATIONAL SEARCH REPORT
Information on patent family members

International application No.

**PCT/CN2016/082145**

| Patent Documents referred in the Report | Publication Date | Patent Family | Publication Date |
|---|---|---|---|
| CN 103037025 A | 10 April 2013 | None | |
| CN 102148752 A | 10 August 2011 | WO 2012083800 A1 | 28 June 2012 |
| CN 101287011 A | 15 October 2008 | None | |
| CN 102368776 A | 07 March 2012 | None | |
| US 2010088405 A1 | 08 April 2010 | None | |

Form PCT/ISA/210 (patent family annex) (July 2009)

**EP 3 190 776 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510767535